# EUROPÄISCHE PATENTSCHRIFT

(11) **EP 2 026 981 B1**
(45) Veröffentlichungstag und Bekanntmachung des Hinweises auf die Patenterteilung: **09.09.2009**
(21) Anmeldenummer: 07727254.0
(22) Anmeldetag: 23.03.2007
(51) Int. Cl.: B60C 1/00, C08C 19/06, C08C 19/22, C08L 9/06

(54) **KAUTSCHUKMISCHUNG UND REIFEN**
RUBBER MIXTURE AND TIRES
MÉLANGE DE CAOUTCHOUC ET PNEU

(30) Priorität: 23.05.2006 DE 102006024035
(43) Veröffentlichungstag der Anmeldung: 25.02.2009
(73) Patentinhaber: Continental Aktiengesellschaft, 30165 Hannover (DE)
(72) Erfinder: STRÜBEL, Christian, 30559 Hanover (DE); SÖHNEN, Dietmar, 31867 Lauenau (DE)
(74) Vertreter: Finger, Karsten
(86) Internationale Anmeldenummer: PCT/EP2007/052780
(87) Internationale Veröffentlichungsnummer: WO 2007/134895

(56) Entgegenhaltungen:
- EP-A- 1 484 362
- EP-A- 1 493 596
- EP-A1- 1 092 565
- EP-A1- 1 323 774
- WO-A-20/05042632
- DE-A1- 3 910 512

## Beschreibung

Die Erfindung betrifft eine schwefelvernetzbare Kautschukmischung, insbesondere für den Laufstreifen von Fahrzeugluftreifen, enthaltend lösungspolymerisierte Styrol-Butadien-Copolymere. Die Erfindung betrifft ferner einen Fahrzeugluftreifen mit einem Laufstreifen, der zumindest zum Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. An Laufstreifenmischungen für PKW- und Van-Reifen werden beispielsweise höchste Anforderungen hinsichtlich des ABS-Nass- und Trockenbremsens, des Abriebwiderstands, des Rollwiderstands, der Haltbarkeit und des Handlings, insbesondere auf trockener Fahrbahn, gestellt. Als Maß für das Handlingverhalten auf trockener Fahrbahn dient die dynamische Steifigkeit, wobei eine Erhöhung der dynamischen Steifigkeit bzw. des dynamischen Moduls E' mit einer Verbesserung des Handlingverhaltens korreliert werden kann.

Eine Möglichkeit zur Verbesserung des Bremsverhaltens auf nasser und trockener Fahrbahn besteht in der Erniedrigung der Härte (statischen Steifigkeit) der Laufstreifenmischung, z. B. durch Erhöhung des Weichmacheranteils. Da sich dynamische und statische Steifigkeit innerhalb eines Mischungssystem in der Regel in gleicher Richtung verändern (d. h. beide werden erhöht oder beide werden erniedrigt), hat dies zur gleichen Zeit eine Reduktion der dynamischen Steifigkeit zur Folge, was mit Einbußen im Handlingverhalten gleichzusetzen ist. Damit kann durch diesen Ansatz das Bremsverhalten nur auf Kosten des Handlingverhaltens verbessert werden.

Um Reifeneigenschaften wie Abrieb, Nassrutschverhalten und Rollwiderstand zu beeinflussen, ist es z. B. bekannt, verschiedene Styrol-Butadien-Copolymere mit unterschiedlichen Styrol- und Vinyl-Gehalten und mit unterschiedlichen Modifizierungen für die Kautschukmischungen zu verwenden.

Aus der EP 1 270 657 A1 ist es bekannt, die Eigenschaften eines Reifens hinsichtlich Nassgriff, Wintereigenschaften, Abrieb und Rollwiderstand zu verbessern, in dem man für die Kautschukmischung, die den Reifenlaufstreifen bildet, 30 - 90 phr eines lösungspolymerisierten Styrol-Butadien-Copolymers (S-SBR) verwendet, das einen Styrolgehalt von 5 bis 35 Gew.-% und einen Vinyl-Anteil von 10 - 85 Gew.-% aufweist. Das S-SBR ist gekoppelt, beispielsweise mit Zinn, und ist mit einer Aminogruppe chemisch modifiziert. Die Kautschukmischung enthält außerdem 10 - 70 phr zumindest eines weiteren Dienkautschuks, 20 bis 100 phr Kieselsäure, 1 - 15 phr Silan-Kupplungsagens und 5 - 60 phr eines speziellen Weichmachers. Das Handlingpotenzial der in der EP 1 270 657 A1 genannten Reifenmischungen entspricht nicht in jedem Fall den gewünschten hohen Anforderungen.

Die EP 1 457 501 A1 offenbart Styrol-Butadien-Copolymere mit einem hohen Vinyl-Anteil, die mit primären Aminogruppen und Alkoxysilylgruppen modifiziert sind, Verfahren zur Herstellung dieser Styrol-Butadien-Copolymere, Kautschukmischungen mit diesen Styrol-Butadien-Copolymeren sowie Reifen, deren Laufstreifen aus dieser Kautschukmischung bestehen. Die Reifen sollen sich durch eine gute Balance zwischen Abriebwiderstand, Haltbarkeit, Hystereseverlust und Nassgriffverhalten auszeichnen.

In der EP 1 153 972 A1 werden Kautschukmischungen für Reifenlaufstreifen beschrieben, die Styrol-Butadien-Copolymere, aufweisend Kopplungszentren mit Epoxidgruppen, ggf. weitere Dienkautschuke, Weichmacheröl, Kieselsäure und Vulkanisationsmittel enthalten. Die Kopplungszentren liegen innerhalb des Polymergerüstes und nicht als Endgruppen vor. Die Kautschukmischungen zeigen eine gute Verarbeitbarkeit und sollen beim Reifen einen geringen Rollwiderstand bei gutem Nassgriff bewirken.

Ausgehend von diesem Stand der Technik liegt der Erfindung die Aufgabe zugrunde, Kautschukmischungen für die Laufstreifen von Fahrzeugluftreifen bereitzustellen, deren Vulkanisate sich durch eine erhöhte dynamische Steifigkeit auszeichnen und damit die kundenrelevante Eigenschaft "Handling auf trockener Straße" verbessern, wobei gleichzeitig die Härte (statische Steifigkeit) auf gleichem Niveau verbleiben oder sogar verringert werden soll, um bei Reifen ein gutes Bremsverhalten zu bewirken.

Gelöst wird diese Aufgabe erfindungsgemäß dadurch, dass die Kautschukmischung
- 20 - 80 phr (Gewichtsteile, bezogen auf 100 Gewichtsteile der gesamten Kautschuke in der Mischung) zumindest eines lösungspolymerisierten Styrol-Butadien-Copolymers A, dessen Endgruppen zumindest mit einer Stickstoff enthaltenden Verbindung chemisch modifiziert sind, und
- 20 - 80 phr zumindest eines weiteren lösungspolymerisierten Styrol-Butadien-Copolymers B, das Kopplungszentren mit Epoxidgruppen aufweist,
enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.
Unter Kopplung (Kupplung, engl.: coupling) wird in der Kautschukindustrie die stabile Verknüpfung von Polymerketten zu verzweigten Strukturen im unvulkanisierten Zustand verstanden.

Überraschenderweise wurde gefunden, dass durch die Kombination von 20 bis 80 phr des endgruppen-modifizierten lösungspolymerisierten Styrol-Butadien-Copolymers A mit 20 bis 80 phr eines weiteren lösungspolymerisierten Styrol-Butadien-Copolymers B, welches an den Kopplungszentren innerhalb des Polymers Epoxidgruppen aufweist, das Verhalten von dynamischer und statischer Steifigkeit entkoppelt werden kann, so dass bei relativ niedrigen statischen Steifigkeiten sehr hohe dynamische Steifigkeiten der Vulkanisate erzielt werden können. Auf diese Weise können bei Verwendung der Mischung als Reifenlaufstreifen sowohl das Nass- und Trockenbremsverhalten als auch die Handlingeigenschaften des Reifens verbessert werden. Die Ursache für die Entkopplung der dynamischen und statischen Steifigkeit könnte in Wechselwirkungen der unterschiedlichen Modifikationsgruppen der lösungspolymerisierten Styrol-Butadien-Copolymere (Endgruppenmodifizierung mit stickstoffhaltigen Verbindungen - Kopplungszentren mit Epoxidgruppen) liegen.

Die in der Kautschukmischung eingesetzten lösungspolymerisierten Styrol-Butadien-Copolymere A und B weisen vorzugsweise einen Vinyl-Anteil von 25 - 70 Gew.-% und einen Styrol-Anteil von 10 - 40 Gew.-% auf.

Gemäß einer bevorzugten Weiterbildung der Erfindung sind die Endgruppen des lösungspolymerisierten Styrol-Butadien-Copolymers A mit zumindest einer Substanz ausgewählt aus der Gruppe, bestehend aus Aminoaldehyden, Aminoketonen, Aminothioaldehyden, Aminothioketonen und organischen Substanzen, die in ihrem Molekül einen Strukturbaustein 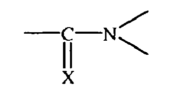 mit X = O oder S aufweisen, chemisch modifiziert. Besonders bevorzugt wird zur chemischen Endgruppenmodifizierung ein Aminobenzophenon eingesetzt.

Neben der Endgruppenmodifizierung mit Stickstoff enthaltenden Verbindungen kann das eingesetzte lösuncspolymerisieile Styrol-Butadien-Copolymer A zusätzlich auch andere Endgruppen, z. B. Alkoxysilylgruppen, aufweisen und beispielsweise mit Zinn gekoppelt sein. Als lösunaspolymerisierte Styrol-Butadien-Copolymere A können beispielsweise so genannte HPR-Typen von der Firma JSR Corporation, deren Herstellung beispielsweise in der EP 1 457 501 A1 offenbart ist, oder NS 116 R der Firma Nippon Zeon (s. z. B. US 4,616,069) eingesetzt werden.

Als lösungspolymerisiertes Styrol-Butadien-Copolymer B können alle Typen mit Epoxidgruppen an den Kopplungszentren verwendet werden, so können beispielsweise die Typen E10 E15, E50, E60 oder L233S von der Firma Asahi (s. a. EP 1 153 972 Al), die zusätzlich durch das für die Kopplung verwendete Epoxid noch aminische Funktionalitäten aufweisen, oder KA 8955 der Firma Lanxess eingesetzt werden.

Die erfindungsgemäße Kautschukmischung kann neben den genannten lösungspolymerisierten Styrol-Butadien-Copolymeren A und B weitere Kautschuke wie z. B. Styrol-Isopren-Butadien-Terpolymer, Butylkautschuk, Halobutylkautschuk oder Ethylen-Propylen-Dien-Kautschuk (EPDM), enthalten. Bevorzugt ist es allerdings, wenn die Kautschukmischung 5 bis 50 phr zumindest eines weiteren Dienkautschukes ausgewählt aus der Gruppe, bestehend aus Naturkautschuk (NR), synthetischem Polyisopren (IR), Polybutadien (BR) und anderen Styrol-Butadien-Copolymeren (SBR), enthält. Diese Dienkautschuke lassen sich gut zu der Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um Vinyl-Polybutadien-(40-90 Gew.-% Vinyl-Anteil) handeln. Bevorzugt ist die Verwendung von cis-1,4-Polybutadien mit einem cis-1,4-Anteil größer 90 Gew.-%, welches z. B. durch Lösungspolymelisation in Anwesenheit von Katalysatoren vom Typ der seltenen Erden hergestellt werden kann.

Bei den anderen Styrol-Butadien-Copolymeren handelt es sich um solche, die nicht unter die speziell modifizierten lösungspolymerisierten Typen gemäß Anspruch 1 fallen. Es kann sich z. B. um nicht oder anders modifizierte oder gekoppelte lösungspolymerisierte Styrol-Butadien-Copolymere handeln. Es können aber auch emulsionspolymerisierte Styrol-Butadien-Copolymere (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zur weiteren Verbesserung der dynamischen Steifigkeit enthalt die Kautschukmischung 20 - 100 phr, bevorzugt 50 - 90 phr, zumindest einer Kieselsäure und 1 - 15 phr zumindest eines Silan-Kupplungsagenzes. Die Endgruppen und Kopplungszentren der lösungspolymerisierten Styrol-Butadien-Copolymere A und B scheinen vorteilhaft mit den polaren Gruppen der Kieselsäure und des Silan-Kupplungsagenzes in Wechselwirkung zu treten. Es können dabei alle dem Fachmann für die Reifenindustrie bekannten Kieselsäuren eingesetzt werden.

Die Silan-Kupplungsagenzien dienen gleichzeitig zur Verbesserung der Verarbeitbarkeit und zur Anbindung der Kieselsäure und anderer ggf. vorhandener polarer Füllstoffe an den Dienkautschuk und reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden.

Die Kautschukmischung kann neben Kieselsäure auch noch weitere Füllstoffe wie Aluminiumhydroxid, Schichtsilikate, Kreide, Stärke, Magnesiumoxid, Titandioxid, Kautschukgele, Kurzfasern usw. in beliebigen Kombinationen enthalten. Vorzugsweise enthält sie jedoch 5 bis 35 phr Ruß.

Aus ökologischer Sicht ist es von Vorteil, wenn die Kautschukmischung frei von aromatischen Prozessölen ist. Unter aromatischen Prozessölen versteht man Mineralölweichmacher, die gemäß ASTM D 2140 über 25 %, vorzugsweise über 35 %, aromatische Bestandteile (C_{A}), weniger als 45 % naphthenische (C_{N}) und weniger als 45 % paraffinische (C_{P}) Bestandteile enthalten. Die Viskositäts-Dichte-Konstante gemäß ASTM D 2140 (VDK) von aromatischen Prozessölen ist größer als 0,9. Ferner werden die aromatischen Prozessöle nach ASTM D 2226 klassifiziert in Öltyp 101 und 102.

An Stelle der aromatischen Prozessöle werden bevorzugt 1 - 80 phr, vorzugsweise 3 - 30 phr, zumindest eines Mineralölweichmachers, der einen Gehalt an polycyclischen aromatischen Verbindungen, bestimmt mit dem DMSO-Extrakt nach der IP 346 Methode, von weniger als 3 Gew.-%, bezogen auf das Gesamtgewicht des Mineralölweichmachers, eingesetzt. Die polycyclischen aromatischen Verbindungen umfassen aromatische Kohlenwasserstoffe, die mehr als drei kondensierte aromatische Ringe enthalten, und die davon abgeleiteten heterocyclischen Verbindungen mit Schwefel- und/oder Stickstoff. Die Ringe können mit kurzen Alkyl- oder Cycloalkylgruppen substituiert sein.

Die Menge von 1 - 80 phr, vorzugsweise 5 - 30 phr, eines Mineralölweichmachers oder Kombinationen aus mehreren Mineralölweichmachern gewährleistet eine optimale Verarbeitbarkeit bei guten dynamischen Eigenschaften und guter Kälteflexibilität.

Als Mineralölweichmacher, deren Gehalte an polycyclischen aromatischen Verbindungen (PCA-Gehalt), bestimmt mit dem DMSO-Extrakt nach der IP 346 Methode, weniger als 3 Gew.-%, bezogen auf das Gesamtgewicht des Mineralölweichmachers, betragen, können grundsätzlich alle dem Fachmann bekannten Mineralölweichmacher benutzt werden, die diese Werte erfüllen. Derartige Mineralölweichmacher sind z. B. MES (mild extraction solvate), das durch Solvent-Extraktion von Schweröldestillaten oder durch Behandlung von Schweröldestillaten mit Wasserstoff in Anwesenheit eines Katalysators (Hydrierung) erhalten wird, TDAE (treated destillate aromatic extract) oder naphthenische Weichmacher. Hinsichtlich dieser Mineralölweichmacher sei in diesem Zusammenhang exemplarisch auf V. Null, "Safe Process Oils for Tires with Low Environmental Impact", Kautschuk Gummi Kunststoffe, 12/1999, S. 799-805 verwiesen. Die Verwendung derartiger Mineralölweichmacher in Kautschukmischungen ist z. B. auch aus der EP 0 940 462 A2 bekannt. Wird ein Mineralölweichmacher mit einer Glasübergangstemperatur von weniger als - 45 °C verwendet, kann man die Kälteflexibilität bei tieferen Temperaturen weiter verbessern.

Neben den bereits genannten Inhaltsstoffen kann die Kautschukmischung weitere in der Kautschukindustrie übliche Zusatzstoffe wie z. B. weitere Weichmacher, Alterungsschutzmittel, Aktivatoren, wie z. B. Zinkoxid und Fettsäuren (z. B. Stearinsäure), Wachse und Mastikationshilfsmittel in üblichen Gewichtsteilen enthalten.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Fahrzeugluftreifenrohlings wie bekannt aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung soll nun anhand von Vergleichs- und Ausführungsbeispielen, die in der Tabelle 1 zusammengefasst sind, näher erläutert werden.

Bei sämtlichen in der Tabelle 1 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäße Mischung ist mit E gekennzeichnet. Die Mischungen wurden härtegleich eingestellt. Zu beachten ist, dass es sich bei dem S-SBR B um einen mit aromatenfreiem Öl verstreckten Typ handelt. 100 Gewichtsteile Kautschuk wurden mit 37,5 Gewichtsteilen Öl verstreckt (Ölgehalt: 27,3 %). Rechnet man das Öl heraus, so addieren sich die Kautschukanteile wie üblich zu 100.

Mit den Mischungen gemäß Tabelle 1 wurden Reifen hergestellt, deren Laufstreifen aus den angegebenen Mischungen bestehen. Mit diesen Reifen wurde vergleichende Versuche bezüglich des ABS-Nassbremsens, des ABS-Trockenbremsens, des Rollwiderstandes und des Abriebs durchgeführt. Die Eigenschaften des Reifens mit einem Laufstreifen aus einer Mischung gemäß 1(V) wurde gleich 100 gesetzt, Werte größer als 100 bedeuten eine Verbesserung der entsprechenden Eigenschaft (Wertung, rating).
Ferner wurden die Shore A-Härte bei Raumtemperatur gemäß DIN 53 505 und der dynamische Modul E' (dynamische Steifigkeit) in Abhängigkeit von der Dehnung (0,1- 12 %) bei konstanter Temperatur für die Mischungen im Labor ermittelt. Dazu erfolgte die Mischungsherstellung unter üblichen Bedingungen in zwei Stufen in einem Labortangentialmischer. Aus den Mischungen wurden Prüfkörper durch optimale Vulkanisation unter Druck bei 160 °C hergestellt und mit diesen Prüfkörpern die Shore A-Härte und der dynamische Modul E', der auf das Handlingverhalten auf trockener Fahrbahn schließen lässt, ermittelt.

**Tabelle 1**

| Bestandteile | Einheit | 1(V) | 2(V) | 3(E) |
|---|---|---|---|---|
| Naturkautschuk | phr | 30 | 30 | 30 |
| S-SBR Typ A^{a} | phr | 70 | - | 40 |
| S-SBR Typ B, oil extended^{b} | phr | - | 96,25 | 41,25 |
| Ruß N-339 | phr | 10 | 10 | 10 |
| Kieselsäure^{c} | phr | 85 | 85 | 85 |
| TDAE^{d} | phr | 30 | 3 | 13 |
| Silan-Kupplungsagens^{e} | phr | 8 | 8 | 8 |
| Alterungsschutzmittel | phr | 4 | 4 | 4 |
| Zinkoxid | phr | 2 | 2 | 2 |
| Stearinsäure | phr | 1 | 1 | 1 |
| Beschleuniger | phr | 4 | 4 | 4 |
| Schwefel | phr | 1,7 | 1,7 | 1,7 |
| Reifeneigenschaft | | | | |
| ABS-Trockenhremsen | | 100 | 101 | 101 |
| ABS-Nasshremsen | | 100 | 107 | 105 |
| Rollwiderstand | | 100 | 92 | 94 |
| Abrieb | | 100 | 85 | 95 |
| Härte | Shore A | 69 | 69 | 69 |
| Dynamischer Modul E' | MPa | 7,4 | 7,1 | 9,0 |

| | | | | |
|---|---|---|---|---|
| ^{a} NS 116 R, Nippon Zeon, Japan, Vinyl-Anteil: 63 Gew.-%, Styrol-Anteil: 21 Gew.-%, zinngekoppelt und endgruppenmodifiziert mit Aminobenzophenon ^{b} L233S, Asahi, Japan, Vinyl-Anteil: 53 Gew.-%, Styrol-Anteil: 32 Gew.-%, mit Kopplungszentren mit Epoxidgruppen, ölverstreckt mit 27,3 % aromatenfreiem Öl ^{c} VN3, Degussa AG, Deutschland, Stickstoff-Oberfläche: 175 m²/g, CTAB-Oberfläche: 160 m²/g ^{d} treated destillate aromatic extract ^{e} Silquest^{®} A 1589, General Electric Speciality, USA | | | | |

Aus den Daten der Tabelle wird ersichtlich, dass durch die spezielle Kombination der lösungspolymerisierten Styrol-Butadien-Copolymere A und B in überraschender Weise die dynamische Steifigkeit der Vulkanisate stark erhöht werden kann, ohne dass gleichzeitig Einbußen in der Härte (statischen Steifigkeit) hingenommen werden müssen. Dies resultiert bei Verwendung dieser Mischung als Reifenlaufstreifen in einem deutlich verbesserten Handlingverhalten bei gutem Bremsverhalten auf nasser und trockener Fahrbahn, wie dies auch die Reifenergebnisse der Tabelle 1 zeigen.

## Patentansprüche

1. Schwefelvernetzbare Kautschukmischung, insbesondere für den Laufstreifen von Fahrzeugluftreifen, enthaltend
- 20 - 80 phr (Gewichtsteile, bezogen auf 100 Gewichtsteile der gesamten Kautschuke in der Mischung) zumindest eines lösungspolymerisierten Styrol-Butadien-Copolymers A, dessen Endgruppen zumindest mit einer Stickstoff enthaltenden Verbindung chemisch modifiziert sind, und
- 20 - 80 phr zumindest eines weiteren lösungspolymerisierten Styrol-Butadien-Copolymers B, das Kopplungszentren mit Epoxidgruppen aufweist.

2. Kautschukmischung nach Anspruch 1, **dadurch gekennzeichnet, dass** die lösungspolymerisierten Styrol-Butadien-Copolymere A und B einen Vinyl-Anteil 25 - 70 Gew.-% und einen Styrol-Anteil von 10 - 40 Gew.-% aufweisen.

3. Kautschukmischung nach Anspruch 1 oder 2, **dadurch gekennzeichnet, dass** die Endgruppen des lösungspolymerisierten Styrol-Butadien-Copolymers A mit zumindest einer Substanz ausgewählt aus der Gruppe, bestehend aus Aminoaldehyden, Aminoketonen, Aminothioaldehyden, Aminothioketonen und organischen Substanzen, die in ihrem Molekül einen Strukturbaustein 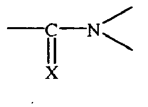 mit X = O oder S aufweisen, chemisch modifiziert sind.

4. Kautschukmischung nach zumindest einem der vorhergehenden Ansprüche, **dadurch gekennzeichnet, dass** sie 5 - 50 phr zumindest eines weiteren Dienkautschuks ausgewählt ist aus der Gruppe, bestehend aus Naturkautschuk, synthetischem Polyisopren, Polybutadien und anderen Styrol-Butadien-Cöpolymeren, enthält.

5. Kautschukmischung nach zumindest einem der vorhergehenden Ansprüche, **dadurch gekennzeichnet, dass** sie 20 - 100 phr, vorzugsweise 50 - 90 phr, zumindest einer Kieselsäure und 1 - 15 phr zumindest eines Silan-Kupplungsagenzes enthält.

6. Kautschukmischung nach zumindest einem der vorhergehenden Ansprüche, **dadurch gekennzeichnet, dass** sie 5 - 35 phr Ruß enthält.

7. Kautschukmischung nach zumindest einem der vorhergehenden Ansprüche, **dadurch gekennzeichnet, dass** sie frei von aromatischen Prozessölen ist.

8. Kautschukmischung nach zumindest einem der vorhergehenden Ansprüche, **dadurch gekennzeichnet, dass** sie 1 - 80 phr, vorzugsweise 3 - 30 phr, zumindest eines Mineralölweichmachers, der einen Gehalt an polycyclischen aromatischen Verbindungen, bestimmt mit dem DMSO-Extrakt nach der IP 346 Methode, von weniger als 3 Gew.-%, bezogen auf das Gesamtgewicht des Mineralölweichmachers, aufweist.

9. Kautschukmischung nach zumindest einem der vorhergehenden Ansprüche, **dadurch gekennzeichnet, dass** der Mineralölweichmacher ausgewählt ist aus der Gruppe, bestehend aus naphthenischen Mineralölweichmachern, MES (mild extraction solvate) und TDAE (treated distillate aromatic extract).

10. Fahrzeugluftreifen mit einem Laufstreifen, der zumindest zum Teil aus einer mit Schwefel vulkanisierten Kautschukmischung nach einem der Ansprüche 1 bis 9 besteht.

## Claims

1. Sulfur-crosslinkable rubber mixture, in particular for the tread of vehicle tires, containing
- 20 - 80 phr (parts by weight, based on 100 parts by weight of the total rubbers in the mixture) of at least one solution-polymerized styrene-butadiene copolymer A whose terminal groups are chemically modified at least by a nitrogen-containing compound, and
- 20 - 80 phr of at least one further solution-polymerized styrene-butadiene copolymer B which has coupling centers with epoxide groups.

2. Rubber mixture according to Claim 1, **characterized in that** the solution-polymerized styrene-butadiene copolymers A and B have a vinyl fraction of 25 - 70% by weight and a styrene fraction of 10 - 40% by weight.

3. Rubber mixture according to Claim 1 or 2, **characterized in that** the terminal groups of the solution-polymerized styrene-butadiene copolymer A are chemically modified with at least one substance selected from the group consisting of aminoaldehydes, aminoketones, aminothioaldehydes, aminothioketones and organic substances which have a structural building block 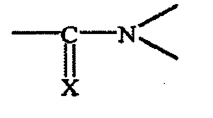 where X = O or S, in their molecule.

4. Rubber mixture according to at least one of the preceding claims, **characterized in that** it contains 5 - 50 phr of at least one further diene rubber selected from the group consisting of natural rubber, synthetic polyisoprene, polybutadiene and other styrene-butadiene copolymers.

5. Rubber mixture according to at least one of the preceding claims, **characterized in that** it contains 20 - 100 phr, preferably 50 - 90 phr, of at least one silica and 1 - 15 phr of at least one silane coupling agent.

6. Rubber mixture according to at least one of the preceding claims, **characterized in that** it contains 5 - 35 phr of carbon black.

7. Rubber mixture according to at least one of the preceding claims, **characterized in that** it is free of aromatic process oils.

8. Rubber mixture according to at least one of the preceding claims, **characterized in that** it contains 1 - 80 phr, preferably 3 - 30 phr, of at least one mineral oil plasticizer which has a content of polycyclic aromatic compounds, determined with the DMSO extract according to the IP 346 method, of less than 3% by weight, based on the total weight of the mineral oil plasticizer.

9. Rubber mixture according to at least one of the preceding claims, **characterized in that** the mineral oil plasticizer is selected from the group consisting of naphthenic mineral oil plasticizers, MES (mild extraction solvate) and TDAE (treated distillate aromatic extract).

10. Pneumatic vehicle tire having a tread which at least partly comprises a sulfur-vulcanized rubber mixture according to any of Claims 1 to 9.

## Revendications

1. Composition de caoutchouc réticulable au soufre, en particulier pour la bande de roulement de pneumatiques à air pour véhicules, contenant
- 20 - 80 phr (parties en poids par rapport à 100 parties en poids de l'ensemble des caoutchoucs dans la composition) d'au moins un copolymère styrène-butadiène A polymérisé en solution, dont les groupes terminaux sont modifiés chimiquement au moins par un composé contenant de l'azote, et
- 20 - 80 phr d'au moins un autre copolymère styrène-butadiène B polymérisé en solution qui présente des centres de couplage avec des groupes époxyde.

2. Composition de caoutchouc selon la revendication 1**, caractérisée en ce que** les copolymères styrène-butadiène A et B polymérisés en solution présentent une teneur en vinyle de 25 - 70 % en poids et une teneur en styrène de 10 - 40 % en poids.

3. Composition de caoutchouc selon la revendication 1 ou 2, **caractérisée en ce que** les groupes terminaux du copolymère styrène-butadiène A polymérisé en solution sont modifiés chimiquement par au moins une substance choisi dans le groupe constitué par les aminoaldéhydes, les aminocétones, les aminothioaldéhydes, les aminothiocétones et des substances organiques qui présentent dans leur molécule un motif structurel 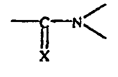 dans laquelle X = O ou S.

4. Composition de caoutchouc selon au moins l'une des revendications précédentes, **caractérisée en ce qu'**elle contient 5 - 50 phr d'au moins un autre caoutchouc diène choisi dans le groupe constitué par le caoutchouc naturel, le polyisoprène synthétique, le polybutadiène et des autres copolymères styrène-butadiène.

5. Composition de caoutchouc selon au moins l'une des revendications précédentes, **caracterisée en ce qu**'elle contient 20 - 100 phr, de préférence 50 - 90 phr, d'au moins un acide silicique et 1 - 15 phr d'au moins un réactif de couplage silane.

6. Composition de caoutchouc selon au moins l'une des revendications précédentes, **caractérisée en ce qu'**elle contient 5 - 35 phr de noir de carbone.

7. Composition de caoutchouc selon au moins l'une des revendications précédentes, **caractérisée en ce qu'**elle est exempte d'huiles aromatiques de processus.

8. Composition de caoutchouc selon au moins l'une des revendications précédentes, **caracterisée en ce qu**'elle contient 1 - 80 phr, de préférence 3 - 30 phr, d'au moins un plastifiant de type huile minérale, qui présente une teneur en composés aromatiques polycycliques, déterminé avec l'extrait dans du DMSO selon la méthode IP 346, de moins de 3 % en poids, par rapport au poids total du plastifiant de type huile minérale.

9. Composition de caoutchouc selon au moins l'une des revendications précédentes, **caractérisée en ce que** le plastifiant de type huile minérale est choisi dans le groupe constitué par des plastifiants de type huile minérale naphténiques, le MES (mild extraction solvate) et le TDAE (treated distillate aromatic extract).

10. Pneumatique à air pour véhicule comportant une bande de roulement dont au moins une partie consiste en une composition de caoutchouc vulcanisée au soufre selon l'une quelconque des revendications 1 à 9.
